# EUROPÄISCHE PATENTSCHRIFT

(11) **EP 3 677 768 B1**
(45) Veröffentlichungstag und Bekanntmachung des Hinweises auf die Patenterteilung: **08.06.2022**
(21) Anmeldenummer: 19218712.8
(22) Anmeldetag: 20.12.2019
(51) Int. Cl.: F02K 9/95, F42C 19/08

(54) **ZÜNDVORRICHTUNG UND VERFAHREN ZUM BETREIBEN DER ZÜNDVORRICHTUNG**
IGNITION DEVICE AND METHOD FOR OPERATING SAME
DISPOSITIF D'ALLUMAGE ET PROCÉDÉ DE FONCTIONNEMENT DU DISPOSITIF D'ALLUMAGE

(30) Priorität: 04.01.2019 DE 102019100090
(43) Veröffentlichungstag der Anmeldung: 08.07.2020
(73) Patentinhaber: Deutsches Zentrum für Luft- und Raumfahrt e.V., 51147 Köln (DE)
(72) Erfinder: Zimmermann, Herbert, 74196 Neuenstadt (DE); Costa Ruiz, Eugeni, 74189 Weinsberg (DE)
(74) Vertreter: Fleck, Julia Maria

(56) Entgegenhaltungen:
- EP-A2- 1 998 036
- JP-A- H0 814 561
- US-A1- 2008 264 372

## Beschreibung

Die Erfindung betrifft eine Zündvorrichtung zur Initiierung eines Verbrennungsprozesses in einer zündfähigen Umgebung unter Erzeugung der Zündenergie durch Verbrennung eines Oxidator-Brennstoffgemisches, mit einem sich entlang einer Längsachse erstreckenden Körper, einem von dem Körper umschlossenen Brennraum, einer Oxidatorzufuhranordnung und einer Brennstoffzufuhranordnung umfassend jeweils eine Mündung in den Brennraum und mit einem stromab des Brennraums angeordneten Austritt zur Anordnung an die zündfähige Umgebung.

Zündvorrichtungen dieser Art, auch als Zündbrenner bezeichnet, kommen z. B. zum Zünden von Brennkammern in (Raketen-) Triebwerken zum Einsatz. Als Sicherheitseinrichtungen finden sie weiterhin Anwendung zum gezielten Abbrennen zündfähiger Gase, um deren Akkumulation und unkontrollierte Zündung in einer Umgebung zu verhindern. Solche Einsatzgebiete ergeben sich beispielsweise im Kraftwerksbetrieb oder auch in der Peripherie von (Triebwerks-) Prüfständen. Insbesondere in der Peripherie von Raketenprüfständen treten dabei teils raue Bedingungen auf, wie Querströmungen, zeitweiliges Vakuum und/oder Sauerstoffmangel und/oder die Anwesenheit von Wassertropfen und/oder Spraynebel, die sich sehr kurzfristig ändern können. Auch unter derartigen Bedingungen ist sicherzustellen, dass der verwendete Zünderbrenner nicht beschädigt wird und verlöschresistent und/oder bedarfsweise verlässlich wiederzündbar ausgelegt ist.

Robustere Zündvorrichtungen, von deren Art auch die vorliegende Erfindung ausgeht, finden sich beispielsweise bei Raketentriebwerken wieder. Eine Zündvorrichtung dieser Art ist beispielsweise in der EP 3 156 635 A1 angegeben. Solche Zündvorrichtungen sind jedoch nicht für einen Dauerbetrieb und stark wechselnde Umgebungsbedingen ausgelegt, wie sie in einem Prüfstandbetrieb auftreten. Insbesondere bei Dauerbetrieb können die Zündvorrichtung und/oder angrenzende Systeme durch die in der Regel hohe Wärmeentwicklung im Betrieb beschädigt werden. Zur Vermeidung von Wärmeschäden müsste die Verbrennungstemperatur innerhalb der Zündvorrichtung sehr niedrig gehalten werden, sodass ggf. keine ausreichend hohe Temperaturen am Austritt zur Initiierung eines Verbrennungsprozesses und/oder stabile Verbrennung erreichbar sind/ist. Alternativ müsste ein aufwändiges, leistungsfähiges Kühlsystem, z. B. mit einer Kühlwasserkühlung, vorgesehen werden.

In der JP H08 14561 A ist eine Pilot-Brennervorrichtung mit einem Innenrohr, in dem ein Durchgang für Verbrennungsgas vorhanden ist, und einem das Innenrohr unter Abstand umgebenden Außenrohr gezeigt. Das Innenrohr und das Außenrohr sind an ihrem eingangsseitigen Ende (A-Seite) miteinander verschweißt und durch den Zwischenraum zwischen dem Innenrohr und dem Außenrohr wird ein Kühlmittel geleitet.

Ein Zündsystem zur Zündung eines Brenners mit Druckenergie ist in der EP 1 998 036 A2 gezeigt.

In der US 9 476 399 B1 ist ein Zündsystem zur Zündung eines brennbaren H₂-O₂-Gemisches mittels einer heißen Oberfläche in einer zweistufigen Brennkammer offenbart. Die zweite Brennkammer ist von einem ringförmigen Strömungskanal umgeben.

Der Erfindung liegt die Aufgabe zugrunde, eine robuste Zündvorrichtung bereitzustellen, die im Dauerbetrieb ohne ein aufwändiges Kühlsystem bei gleichzeitiger Bereitstellung ausreichend hoher Temperaturen am Austritt betreibbar ist, sowie ein Verfahren zum Betreiben einer derartigen Zündvorrichtung.

Die Aufgabe wird für die Zündvorrichtung mit den Merkmalen des Anspruchs 1 und für das Verfahren mit den Merkmalen des Anspruchs 11 gelöst. Bei der Zündvorrichtung ist vorgesehen, dass der Brennraum in einem separaten Innengehäuse angeordnet ist, das in einem Raum des Körpers lösbar eingebracht ist und mit einer Wandung den Brennraum umgrenzt.

Vorzugsweise besteht das Innengehäuse aus einem hochtemperaturfesten Material, beispielsweise aus einer hochtemperaturfesten Metalllegierung und/oder Keramik. Das Innengehäuse ist vorzugsweise einstückig und kann beispielsweise über ein additives Fertigungsverfahren (3-D Druck) hergestellt sein.

Das Innengehäuse umgibt im Betrieb die Verbrennungszone und stromab der Verbrennungszone entstandene heiße Gase und leitet diese zu dem Austritt. Auf diese Weise werden die heißen Gase von der Innenseite des Körpers ferngehalten bzw. ihr Kontakt mit dem Körper, zumindest weitgehend, verhindert. So wird durch das separate Innengehäuse der Körper vor der hohen Wärmeentwicklung bei der Verbrennung abgeschirmt und geschützt. Die Verbrennungswärme trifft zunächst auf das Innengehäuse auf. Durch die separate, lösbare Befestigung des Innengehäuses in dem Körper kann das Innengehäuse als eine Art Verschleißteil nach einer vergleichsweise geringen Betriebsdauer, geringer als der Körper (als Außenhülle), gewechselt werden. Der übrige Körper kann zur Bereitstellung der benötigten Peripherie für den Verbrennungsprozess und zur Abschirmung der Umgebung vor Abwärme wesentlich massiver und (Kosten-) aufwendiger ausgestaltet sein als das Innengehäuse. Vorteilhaft kann der Körper durch diese Ausgestaltung über eine wesentlich höhere Gesamtbetriebsdauer betrieben werden, auch ohne eine aufwendige externe Kühlung z. B. mittels Kühlwasser. Zudem wird die angrenzende Umgebung vor übermäßiger Abwärme des Körpers geschützt. Durch den (zumindest weitgehenden) Verzicht eines Kühlsystems kann zudem ein großer Teil des Energiegehalts des Brennstoffes in Wärme umgewandelt werden und als Zündenergie dienen. Dadurch ist ein vergleichsweise höherer Wirkungsgrad der Zündvorrichtung 1 erreichbar als bei Verwendung eines zusätzlichen Kühlsystems.

An ein stromabseitiges Ende des Brennraums schließt sich ein Längskanal an, der eine größere axiale Länge als Höhe bzw. Durchmesser besitzt. Der Austritt ist an dem stromabseitigen Ende, das an oder in der zündfähigen Umgebung mündet, angeordnet. Der Längskanal ist vorzugsweise zum Schutz vor (mechanischer) Beschädigung von einem Längsabschnitt des Körpers umgeben, wobei die Kontaktfläche zwischen dem Längskanal und dem Längsabschnitt zur Reduktion der Wärmeleitung gering gehalten ist. Die längliche Ausbildung erlaubt eine definierte Positionierung des Austritts in der Umgebung, an dem heiße Gase zum Transport der Zündenergie in die Umgebung gelangen. So kann bedarfsweise der Austritt auf Höhe einer Außenwandung, die die Umgebung umgrenzt, oder weiter in die Umgebung hinein platziert werden, wo gegebenenfalls eine höhere Konzentration eines zündfähigen Gemisches vorliegt.

Das stromabseitige Ende des Brennraums geht in einer Düsenanordnung in den Längskanal über. Die Düsenanordnung ist derart ausgebildet, dass sie im Betrieb stromab des Brennraums eine Überschallströmung bewirkt, z. B. in Art einer Lava-Idüse. Hierzu weist auch der Längskanal einen entsprechenden Strömungsquerschnitt auf. Die Düsenanordnung und der Strömungsquerschnitt des Längskanals sind, z. B. bzgl. eines Auslegungsbetriebs-punktes, unter Kenntnis der Betriebsbedingungen (Leistungsbereich (z. B. zwischen 5 kW und 500 kW, insbesondere zwischen 50 kW und 250 kW, z. B. zwischen 150 kW und 200 kW, bzgl. Umsetzung des gesamten eingebrachten Brennstoffes), zu erwartende Gastemperatur und - zusammensetzung und Druck im Brennraum sowie Druck in der Umgebung der Zündvorrichtung etc.) entsprechend ausgelegt. Die Düsenanordnung weist insbesondere zunächst einen konvergierenden Abschnitt auf, bis zu einem Strömungsquerschnitt, der zum Erreichen der Schall-geschwindigkeit dimensioniert ist. Stromab dieses Strömungsquerschnitts weist die Düsenanordnung einen divergenten Abschnitt auf, bevorzugt entsprechend einer Überschallkontur, wodurch eine weitere Erhöhung der Geschwindigkeit bzw. der Machzahl erzeugt wird. Auf diese Weise wird eine robuste Zündvorrichtung bereitgestellt, die auch unter rauen Umgebungsbedingungen störungsfrei betreibbar ist. Durch die Überschallströmung ist die innere Verbrennung, innerhalb der Zündvorrichtung, (weitgehend) von ggf. störenden Umgebungsbedingungen entkoppelt. Weiterhin kann die Strömung mit einem hohen Impuls durch die Austrittsöffnung in die Umgebung eintreten, wodurch eine hohe Eindringtiefe in die zündfähige Umgebung erreichbar ist.

Eine maßgebliche Reduktion des Wärmeübergangs von dem Innengehäuse auf den Körper ist dadurch erreichbar, dass das Innengehäuse zumindest teilweise, insbesondere großteils (d. h. mit mehr als 50 %, vorzugsweise mehr als 70 % oder 90 % seiner Außenwandfläche) von der Innenwandfläche des Raums beabstandet angeordnet ist. Der Abstand kann beispielsweise zumindest die Hälfte der Wandstärke des Innengehäuses (an der jeweiligen Stelle) betragen oder zumindest der Wandstärke des Innengehäuses (an der jeweiligen Stelle) entsprechen. Der dabei entstehende Zwischenraum zwischen dem Innengehäuse und dem Raum kann z. B. (strömungsfrei) mit (Umgebungs-)Luft und/oder einem anderen Gas gefüllt sein. Denkbar ist auch die Einbringung eines Isoliermaterials, wie beispielsweise Keramik, ein hochporöser Festkörper (Aerogel) oder ein Fasermaterial. Durch die geringe Kontaktfläche zwischen Körper und Innengehäuse wird, auch ohne eine konvektive Kühlung innerhalb des Zwischenraums, der Wärmeübergang mittels Wärmeleitung zwischen dem Innengehäuse und dem Körper reduziert und der Körper vor hohem Wärmeeintrag und damit verbundenen Überhitzungsschäden geschützt.

Eine stabile Lagerung mit zugleich geringer Kontaktfläche des Innengehäuses in dem Körper ergibt sich, wenn das Innengehäuse mittels einer umlaufend an der Wandung angeordneten Ringscheibe an bzw. in dem Körper gelagert ist. Für eine hohe Stabilität kann die Wandstärke der Wandung stromauf der Ringscheibe gegenüber der übrigen Wandstärke im Bereich des Brennraums erhöht sein. Die Ringscheibe kann, beispielsweise flanschartig, radial umlaufend an der Wandung einteilig befestigt sein. So steht die Ringscheibe radial über die Brennkammer über und weist den größten Radius des Innengehäuses auf. Vorzugsweise ist die Ringscheibe als Klemmabschnitt ausgebildet, so dass sie an dem Körper, beispielsweise zwischen zwei Teile des Körpers, geklemmt sein kann. Zur Dichtung nach außen sind dabei vorzugsweise jeweils umlaufende Dichtmittel zu beiden Seiten des Klemmabschnitts angeordnet. Für eine stabile Lagerung des Innengehäuses können weitere Lagerstellen vorhanden sein. So kann beispielsweise ein erster Endabschnitt des Innengehäuses in Ausbildung eines zylindrischen Abschnitts in einer komplementären Ausnehmung in dem Körper form-, kraft- und/oder stoffschlüssig befestigt sein.

Für eine einfache Montage und Demontage des Innengehäuses ist der Körper vorzugsweise modular aufgebaut, wobei er zumindest zwei voneinander lösbare Teile umfasst und wobei die Ringscheibe zwischen zwei Teilen gelagert ist. In einer bevorzugten Ausgestaltungsvariante kann der Körper z. B. 3-teilig aufgebaut sein, mit einem Kopfteil umfassend die Zufuhranordnungen, einem im Wesentlichen zylindrische Mittelteil und einem Austrittsteil, in dem der Teil des Innengehäuses mit dem Austritt angeordnet ist. Der Klemmabschnitt kann beispielsweise zwischen dem Kopfteil und dem Mittelteil geklemmt sein.

Für eine Reduktion des Wärmeübergangs mittels Wärmestrahlung zwischen dem Innengehäuse und dem Körper kann vorgesehen sein, dass die Wandung des Innengehäuses auf der, dem Körper zugewandten, Außenfläche und/oder der der Außenfläche zugewandten Innenfläche des Raums zumindest bereichsweise zur Reduktion der Wärmestrahlung behandelt ist, beispielsweise mit einer Politur und/oder einer Beschichtung und/oder einer Bedampfung (Verspiegelung) versehen ist. Durch diese Ausbildung wird der Emissionsgrad der Außenfläche bzw. der Absorptionsgrad der Innenfläche reduziert. Die - beispielsweise elektro- polierte Fläche, zeichnet sich dadurch aus, dass sie eine geringere Oberflächenrauigkeit, d. h. eine glattere Oberfläche, aufweist als die übrige, nicht zur Reduktion des Wärmeübergangs polierte, Fläche, beispielsweise einen Mittenrauwert Ra von kleiner 0,05 µm.

In einer weiteren bevorzugten Ausgestaltungsvariante ist der Längskanal mittels zumindest zweier Lagermittel derart innerhalb eines Längsabschnitts des Raums in dem Körper gelagert, dass der Längskanal gegenüber den Innenwänden des Längsabschnitts radial beabstandet angeordnet ist. Der radiale Abstand kann beispielsweise mehr als die Hälfte, z. B. mehr als der ganze Innenradius des Längsabschnitts betragen. Dadurch kann die Wärmeleitung zwischen dem Längskanal und dem Körper effektiv reduziert werden. Die Lagermittel sind für eine gleichmäßige Lagerwirkung über die Länge vorzugsweise axial beabstandet von einander in der ersten und in der zweiten Hälfte des Längsabschnitts angeordnet. Zweckmäßigerweise erlauben die Lagermittel eine axiale Verschiebung, um Wärmedehnungen aufgrund der Temperaturdifferenzen zu berücksichtigen bzw. die notwendige Längsdehnung des Innengehäuses zu ermöglichen.

In einer vorteilhaften Ausbildung können dabei die Lagermittel jeweils mit einzelnen Streben und/oder sternförmig und/oder als Ringscheiben und/oder in Art von Vielecken, z. B. von gleichschenkligen Dreiecken, ausgebildet sein, die den Längskanal jeweils symmetrisch umgeben und z. B. einteilig mit diesem verbunden sind. So wird eine stabile radiale Festlegung mit zugleich geringer Kontaktfläche über z. B. jeweils, bei einer Dreiecksform drei, Kontaktpunkte zur Minderung der Wärmeleitung zwischen dem Längskanal und dem Körper erreicht.

In einer bevorzugten Ausbildungsvariante sind die Brennstoffmündung und die Oxidatormündung stirnseitig an einem stromaufseitigen Ende des Brennraums zur axialen Zufuhr von Brennstoff und Oxidator und koaxial zu der Längsachse angeordnet. Zum einen kann durch diese Anordnung eine stabile Verbrennung erreicht werden, wobei Strömungsquerschnitte der Mündungen derart ausgelegt sind, dass die Brenngase, oder zumindest das außen einströmende Brenngas, mit hohen Geschwindigkeiten, beispielsweise zwischen 30 m/s und 200 m/s, oder anderen je nach z. B. Druck und Gasart geeigneten Geschwindigkeiten, in den Brennraum eingebracht werden. Weiterhin trägt diese Anordnung dazu bei, dass die Brenngase, d. h. Brennstoff und/oder Oxidator, zusätzlich eine Kühlwirkung entfalten können.

Zur Entfaltung der zusätzlichen Kühlwirkung ist es vorteilhaft, wenn die Brennstoffmündung die Oxidatormündung oder die Oxidatormündung die Brennstoffmündung ringförmig umgibt. Vorzugsweise umgibt die Mündung desjenigen Gases die jeweils andere, welches (insbesondere gemäß Auslegung) mit einem höheren Volumenstrom zugegeben wird. Auf diese Weise bildet sich die Verbrennungszone mit den Spitzentemperaturen in dem Bereich der inneren Scherschicht, zwischen dem innen einströmenden Gas (z. B. Oxidator) und dem außen einströmenden Gas (z. B. Brennstoff), aus. Außen, radial die Verbrennungszone umgebend, kann sich ein Film an vorbeiströmendem Brenngas bilden, das an der Innenfläche der Wandung (zumindest im axialen Bereich der Verbrennungszone) konvektiv kühlend wirkt. So trägt diese konstruktive Ausbildung dazu bei, den Wärmeübergang an das Innengehäuse zu reduzieren.

Die Filmbildung durch das äußere Brenngas kann unterstützt werden, wenn sich stromab der Brennstoffmündung und/oder die Oxidatormündung ein konischer Abschnitt des Innengehäuses anschließt, wobei sich der Brennraum konisch erweitert. Der Öffnungswinkel des Konus zwischen der Längsachse L und der axialradialen Richtung der Wandung beträgt zwischen 15° und 60°, insbesondere zwischen 25° und 45°, z. B. 30°. Durch diese Ausbildung können Strömungsablösungen des durch die radial äußere Mündung zugegeben Brenngases unterbunden bzw. wesentlich reduziert werden und sich ein vergleichsweise gleichmäßiger kühlender Film bilden.

Ein sicheres Zünden auch nach Kontakt der Zündvorrichtung mit z. B. Feuchtigkeit aus der Umgebung wird unterstützt, wenn die Zündvorrichtung ein Zündmittel, z. B. eine Zündkerze, mit Kontakt zu dem Brennraum aufweist, das mittels Inertgas umspülbar ausgebildet ist. Zum Zwecke der Umspülung kann z. B. ein Anschlussstutzen zur Zugabe von Inertgas, z. B. Stickstoff, mit Strömungskontakt zu einem das Zündmittel aufnehmenden Hohlraum in dem Körper angeordnet sein. Die Zugabe des Inertgases erfolgt insbesondere im Bereich der Elektroden des Zündmittels, unterhalb eines Gewindes. Über eine Öffnung in dem Innengehäuse steht das Zündmittel in (Strömungs-)Kontakt zu dem Brennraum. So ist das Zündmittel z. B. vor Zündung trocken spülbar und/oder ist der Brennraum inertisierbar, um unkontrollierte Zündungen zu vermeiden. Die Strömungsführung ist ausgelegt, um einen ausreichenden Gasaustausch zwischen dem Hohlraum und dem Brennraum zu gewährleisten. Bei erfolgter Zündung ist z. B. ein höherer H₂-Anteil in der wandnahmen Strömung vorhanden, die eine Kühlung bewirkt. Diese Ausbildung unterstützt eine schnelle Herstellung der Betriebsfähigkeit und/oder die Zuverlässigkeit der Zündvorrichtung.

Bei dem Verfahren zum Betreiben einer Zündvorrichtung nach einer der vorhergehend angegebenen Ausbildungsvarianten wird die benötigte Zündenergie, d. h. eine zur Zündung ausreichend hohe Wärmeenergie, zum Zünden einer Flamme in einer zündfähigen Umgebung durch Verbrennung eines Oxidator-Brennstoffgemisches erzeugt bzw. bereitgestellt. Dabei wird Brennstoff, z. B. Wasserstoff, und Oxidator, z. B. reiner Sauerstoff, in einen Brennraum zugegeben und dort verbrannt. Das entstehende heiße Gas gelangt durch einen Austritt in eine zündfähige Umgebung. Stromab des Austritts entzünden die austretenden heißen Gase ein zündfähiges Gemisch in der Umgebung und es bildet sich eine "äußere", d. h. außerhalb der Zündvorrichtung stabilisierende, Flamme aus. So kann das zündfähige Gemisch in der Umgebung abreagieren, d. h. es kommt zu einem Abbrand. Wird die Zündvorrichtung bei Brennstoffüberschuss betrieben, wird der in den heißen Gasen befindliche restliche Brennstoff, sobald er in die Umgebung und dabei in Kontakt mit dort befindlichem Oxidator gelangt, mit verbrannt und kann so zur Stabilisierung der äußeren Flamme beitragen. Liegen nicht zündfähige Bedingungen in der Umgebung vor, kann die Zündvorrichtung mit der "inneren" Verbrennung, in dem Brennraum, weiter betrieben werden. Je nach Betriebsbedingungen der Zündvorrichtung und der Umgebungsbedingungen brennt der in den ausströmenden heißen Gasen befindliche Restbrennstoff im Kontakt mit in der Umgebung befindlichem Oxidator ab, oder das heiße Gas strömt unverbrannt von dem Austritt ab (z. B. wenn die Umgebung mit Inertgas angereichert ist oder bei Betrieb der Zündvorrichtung mit Oxidatorüberschuss). Für eine hohe Verlöschresistenz und Leistungsdichte bei kompakter Bauweise findet die Verbrennung vorzugsweise unter hohem Druck statt, beispielsweise zwischen 2 bar und 20 bar, insbesondere zwischen 5 bar und 16 bar Brennraumdruck. Die Verlöschresistenz kann weiter durch einen Schalldurchgang, d. h. Beschleunigung auf Überschallgeschwindigkeit, der Strömung stromab der Verbrennungszone, stromauf des Austritts, verbessert werden. Über den Betriebsdruck ist z. B. die Leistungsdichte variierbar bzw. die Zündvorrichtung skalierbar.

In einer bevorzugten Ausführungsvariante des Verfahrens wird die Verbrennung z. B. bei Brennstoffüberschuss (oder, je nach Brennstoff und Oxidator, auch bei Oxidatorüberschuss) mit einem derartigen Mischungsverhältnis betrieben, dass die adiabate Flammentemperatur unterhalb der oberen Gebrauchstemperatur des Materials des Innengehäuses liegt. Die adiabate Flammentemperatur ist diejenige (theoretische) Temperatur, die sich nach dem vollständigen Ablauf der Verbrennung ergibt, wenn keinerlei Wärme abgeführt wird. Durch diese Verfahrensführung wird die thermische Belastung des Innengehäuses materialspezifisch ausreichend gering gehalten. Die Verbrennung kann auch bei einem Mischungsverhältnis resultierend in einer höheren adiabaten Flammentemperatur betrieben werden, solange die Wandtemperatur des Innengehäuses auch im Dauerbetrieb (d. h. bei einer Betriebsdauer von mindestens 15 Minuten) unterhalb der oberen Gebrauchstemperatur des Materials des Innengehäuses liegt. Maßgeblich ist hierbei der Wärmeübergang auf das / von dem Innengehäuse, der z. B. durch Maßnahmen wie im Zusammenhang mit den Ausführungsbeispielen beschrieben beeinflussbar ist. Der überschüssige Brennstoff kann gegebenenfalls zur Stabilisierung der Flamme am Austritt dienen.

Nachfolgend wird die Erfindung anhand von Ausführungsbeispielen unter Bezugnahme auf die Zeichnungen näher erläutert. Es zeigen:
- Fig. 1A: eine Zündvorrichtung zum Zünden einer Flamme in einer zündfähigen Umgebung, mit einem in einem separaten Innengehäuse innerhalb eines Körpers angeordneten Brennraum, in einem Längsschnitt in perspektivischer Ansicht,
- Fig. 1B: die Zündvorrichtung gemäß Fig. 1A in einem Längsschnitt in seitlicher Ansicht,
- Fig. 2A: das Innengehäuse gemäß Fig. 1A in perspektivischer Ansicht von oben und
- Fig. 2B: ein an einem Längskanal des Innengehäuses nach Fig. 1A angeordnetes Lagermittel in Draufsicht auf einen Querschnitt durch den Längskanal.

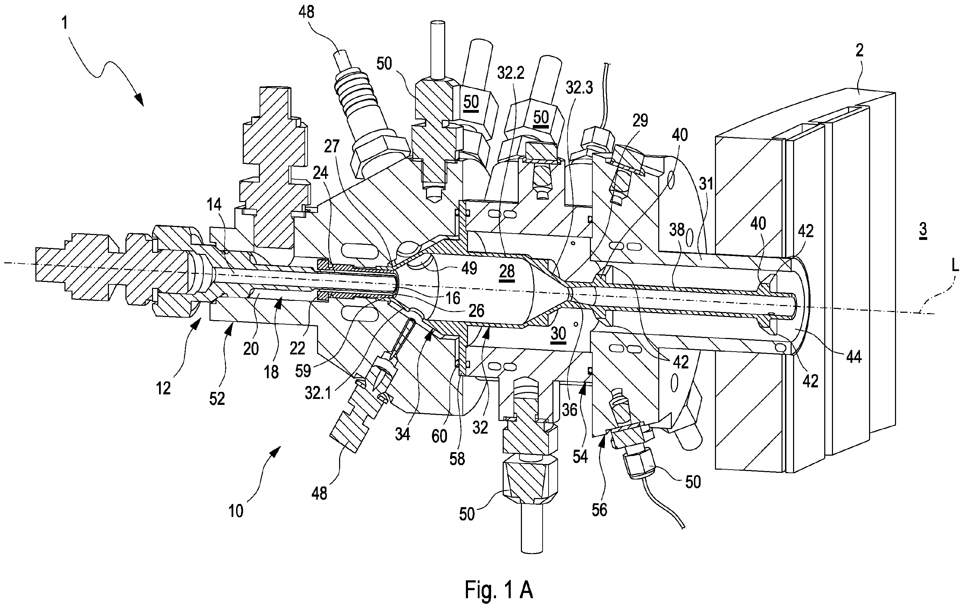

Fig. 1A zeigt eine Zündvorrichtung 1 in Ausbildung als Zündbrenner zum Zünden einer Flamme in einer zumindest zeitweise zündfähigen Umgebung 3. Dabei wird die für die Zündung benötigte Zündenergie in Form von Wärme durch Verbrennung eines Oxidator-Brennstoffgemisches erzeugt. Die zündfähige Umgebung 3 ist z. B. von einer Außenwandung 2 umschlossen und kann innerhalb eines (Raketen-) Prüfstandes, stromab eines (Raketen-) Triebwerks angeordnet sein. Bei Betrieb des Prüfstandes können zündfähige Gasgemische entstehen, die aus Sicherheitsgründen mittels Zündung durch die Zündvorrichtung 1 abzubrennen sind. Zeitweise können in der zündfähigen Umgebung 3 auch nicht zündfähige Bedingungen herrschen, wobei die Umgebung 3 beispielsweise mit Inertgas, Luft und/oder Wasser, zum Teil mit großer Strömungsgeschwindigkeit, durchströmt wird. Auch bei nicht zündfähigen Bedingungen soll die Zündvorrichtung 1 verlöschresistent betrieben werden können und/oder anschließend ein sicheres Wiederzünden gewährleistet sein, um eine gegebenenfalls anschließend wieder zündfähige Gasmischung zeitnah zünden und abbrennen zu können.

Die Zündvorrichtung 1 umfasst einen Körper 10, der sich entlang einer Längsachse L erstreckt. Der Körper 10 ist modular aufgebaut, wobei er vorliegend drei lösbar aneinander befestigte Teile umfasst. Die Teile bilden vorliegend einen Kopfteil 52, einen Mittelteil 54 und einen Austrittsteil 56, der mit einem Längsabschnitt 31 beispielhaft durch die Außenwandung 2 (alternativ ohne die Außenwandung 2) in die zündfähige Umgebung 3 mündet. An dem Körper 10 sind Anschlussstutzen 50 z. B. zum Anschluss von (Überwachung-) Messvorrichtungen und/oder zur Medienzufuhr, z. B. falls verwendet eines Kühlwassersystems, angeordnet. Für eine einfache Montage können z. B. der Kopfteil 52 und der Austrittsteil 56 über eine Flanschverbindung, mit verbindenden länglichen Befestigungsmitteln, beispielsweise Gewindestangen, unter gleichzeitiger Befestigung des Mittelteils 54 aneinander befestigt sein.

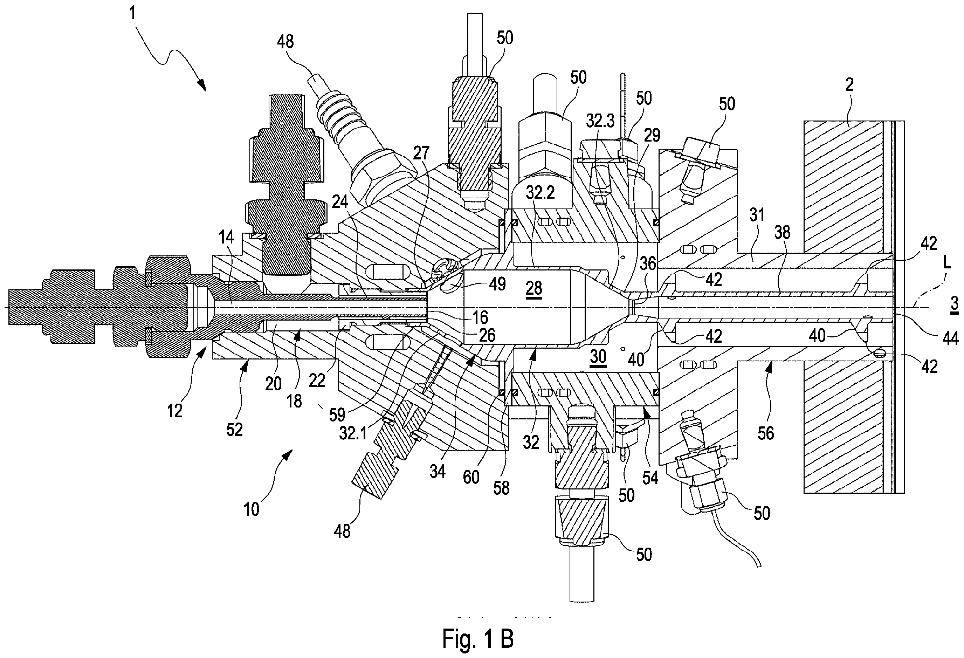

Weiterhin umfasst die Zündvorrichtung 1 einen von dem Körper 10 umschlossenen Brennraum 28 und eine Brennstoffzufuhranordnung 18 sowie eine Oxidatorzufuhranordnung 12, die mit einer Brennstoffmündung 26 bzw. einer Oxidatormündung 16 in den Brennraum 28 münden. Die Brennstoffzufuhranordnung 18 sowie die Oxidatorzufuhranordnung 12 sind in dem in Fig. 1A und 1B gezeigten Ausführungsbeispielen mit Blindstopfen verschlossen, die bei Betriebsbereitschaft durch Anschlüsse an die Brennstoff- bzw. Oxidatorversorgungsperipherie (z. B. durch Rohrverschraubungen) ersetzt sind. Stromab des Brennraums 28 ist ein Austritt 44 vorhanden, mit dem der Brennraum 28 in Strömungsverbindung mit der zündfähigen Umgebung 3 steht.

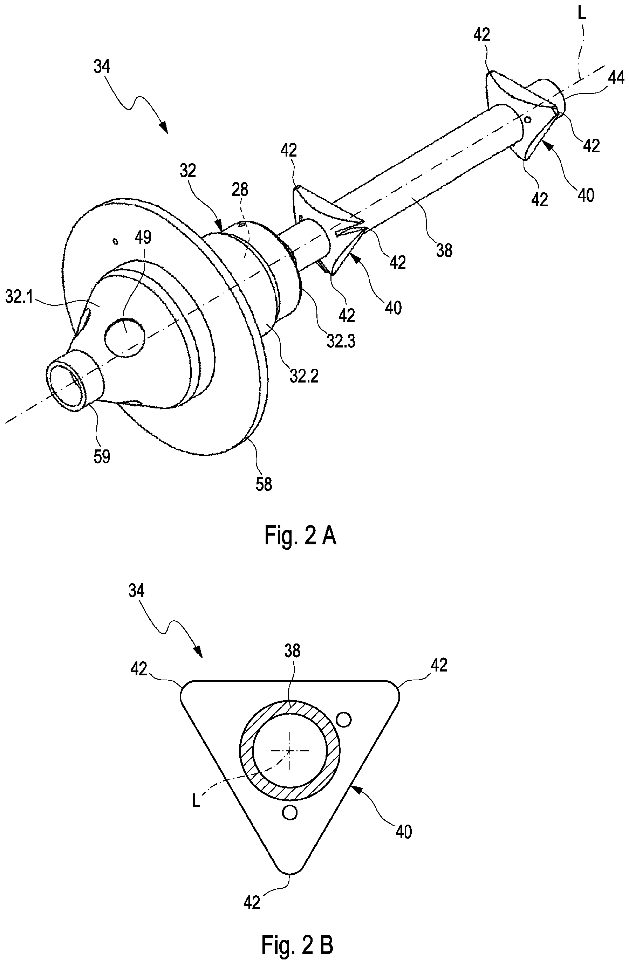

Der Brennraum 28 ist in einem separaten Innengehäuse 34 angeordnet, das innerhalb eines Raums des Körpers 10 lösbar eingebracht bzw. befestigt ist und mit einer Wandung 32 den Brennraum 28 umgrenzt. Das Innengehäuse 34 ist in Fig. 2A in aus dem Körper 10 demontiertem Zustand gezeigt. Das Innengehäuse 34 weist stromaufseitig einen zylindrischen ersten Endabschnitt 59 auf, über welchen die Brennstoffzufuhranordnung 18 und die Oxidatorzufuhranordnung 12 an das Innengehäuse 34 mit Mündung in den Brennraum 28 gekoppelt sind. Stromab schließt sich ein konischer Abschnitt 32.1 des Innengehäuses 34 an, dessen Öffnungswinkel (in Strömungsrichtung) zwischen der Längsachse L und der axialradialen Richtung der Wandung 32 z. B. zwischen 15° und 60°, insbesondere zwischen 25° und 45°, z. B. 30°, beträgt. Anschließend erstreckt sich ein zylindrischer Abschnitt 32.2 des Innengehäuses 34 bis hin zu einem zweiten konischen Abschnitt 32.3, der sich hin zu einem stromabseitigen Ende 29 des Brennraums 28 konisch verjüngt. An der engsten Stelle befindet sich das stromabseitige Ende 29 des Brennraums 28.

Stromab des stromabseitigen Endes 29 geht der Brennraum 28 in einen Längskanal 38 des Innengehäuses 34 über. Der Übergang ist als Düsenanordnung 36 ausgebildet, umfassend den zweiten konischen Abschnitt 32.3 und eine stromab der engsten Stelle derselben vorhandene kontinuierliche Querschnittserweiterung in den Längskanal 38. Die Düsenanordnung 36 ist insbesondere nach Art einer Lavaldüse ausgelegt, sodass im Betrieb die Strömung aus dem Brennraum 28 in den Längskanal 38 auf Überschallgeschwindigkeit beschleunigt wird und sich eine Überschallströmung einstellt. Das Flächenverhältnis der Düsenanordnung ist derart gewählt, dass die Temperatur der sich einstellenden Überschallströmung trotz Expansion ausreichend hoch bleibt, um mittels der Zündvorrichtung einen Verbrennungsprozess initiieren zu können.

Der Längskanal 38 ist in einem Längsabschnitt 31 des Raums 30 bzw. des Körpers 10 angeordnet. Der Austritt 44 befindet sich an dem stromabseitigen Ende des Längskanals 38, das vorliegend beispielhaft koplanar mit dem Abschluss des Längsabschnitts 31 innen an der Außenwandung 2, mit Kontakt zu der Umgebung 3 angeordnet ist. Möglich wäre auch, dass der Längsabschnitt 31 und der Längskanal 38 über die Außenwandung 2 in die zündfähige Umgebung 3 hineinragen. Weiterhin möglich wäre bei Bedarf, anstelle der komplanaren Anordnung, auch ein axialer Versatz. So kann der Längsabschnitt 31 dem Längskanal 38 als Schutz vor widrigen Bedingungen in der zündfähigen Umgebung 3 dienen.

Für eine Reduktion der Wärmeübertragung der bei dem Verbrennungsprozess freigesetzten Wärme an den Köper 10 umfasst die gezeigte Zündvorrichtung 1 diverse konstruktive Ausgestaltungen. Zum einen ist das Innengehäuse 34 innerhalb des Körpers 10 großteils von den Innenwandflächen des Raums 30 beabstandet angeordnet. Die Kontaktstellen zur Lagerung des Innengehäuses 34 innerhalb des Raums 30 sind bezüglich Anzahl und Fläche möglichst gering gehalten, d. h. lediglich von einer derartigen Anzahl und Fläche, dass eine sichere Lagerung des Innengehäuses 34 in dem Raum 30 sichergestellt ist. So kann ein Wärmeübergang zwischen dem Innengehäuse 34 und dem Körper 10 mittels Wärmeleitung weitgehend reduziert werden.

In der gezeigten Ausführungsvariante erfolgt die Lagerung mittels einer an der Wandung 32 im Bereich des Brennraums 28 umlaufend angeordneten, sich radial nach außen erstreckenden Ringscheibe 58. Stromauf der Ringscheibe 58 weist die Wandung 32 für eine erhöhte Stabilität eine größere Wandstärke auf als stromab der Ringscheibe 58. Die Ringscheibe 58 ist flanschartig ausgebildet und dient vorliegend als Klemmabschnitt. Der Durchmesser ist größer als der Durchmesser des Raums 30. Axial ist die Ringscheibe 58 (bzgl. Der Strömungsrichtung) etwa zwischen einem Drittel und der Hälfte der Länge des zylindrischen Abschnitts 32.2 des Brennraums 28 positioniert. An dieser axialen Position befindet sich ebenfalls der Übergang zwischen dem Kopfteil 52 und dem Mittelteil 54 des Körpers 10. Das Innengehäuse 34 ist mittels der Ringscheibe 58 zwischen den Kopfteil 52 und dem Mittelteil 54 geklemmt gehalten, wobei die Klemmverbindung gegen die Umgebung mittels umlaufender Dichtmittel 60 gedichtet ist. Diese Anordnung erlaubt neben einer sicheren Einspannung eine einfache Montage und Demontage, sodass das Innengehäuse 34 z. B. bei Verschleiß einfach ausgetauscht werden kann.

Als weitere Lagerstelle dient der erste Endabschnitt 59 des Innengehäuses 34, welches ohne bzw. mit geringem Spiel zwischen einer Hülse 22 der Brennstoffzufuhranordnung 18 und einem entsprechend ausgeformten Kanalabschnitt innerhalb des Körpers 10 z. B. form- und/oder kraftschlüssig angeordnet ist.

Die Lagerung des Innengehäuses 34 im Bereich des Längskanals 38 zur radialen Beabstandung des Längskanals 38 von den Innenwänden des Längsabschnitts 31 erfolgt in dem gezeigten Ausführungsbeispiel mittels zweier Lagermittel 40. Die Lagermittel 40 sind axial beabstandet jeweils innerhalb einer Hälfte des Längsabschnitts 31 angeordnet, vorzugsweise möglichst nahe an den jeweiligen Enden, z. B. jeweils in den den Enden zugewandten Vierteln, um eine gleichmäßige radiale Beabstandung über die gesamte Länge zu erreichen. Die Lagermittel 40 erlauben eine axiale Verschiebung, um wärmedehnungsbedingte Längsdehnungen des Innengehäuses 34 zu ermöglichen. Die Lagermittel 40 sind jeweils in Art von Dreieckskörpern ausgestaltet, deren Umrisse ein im Wesentlichen gleichschenkliges Dreieck bilden, wie eine Draufsicht auf eines der Lagermittel 40 in Fig. 2B zeigt. Die Lagermittel 40 sind z. B. symmetrisch zu der Längsachse L an dem Längskanal 38 angeordnet und umfassen die Wandung des Längskanals 38 umfangsseitig. Auf diese Weise wird jeweils eine Dreipunktlagerung des Längsabschnitts 31, mit drei Stützpunkten 42 im Bereich des jeweiligen Lagermittels 40, an der Innenwand des Längsabschnitts 31 erreicht. Somit weist die Lagerung wiederum eine in Summe geringe Auflagefläche auf, womit eine möglichst geringe Wärmeleitung erreicht wird.

Um den Wärmeübergang durch Wärmestrahlung zwischen dem Innengehäuse 34 und dem Körper 10 im Betrieb weiter zu reduzieren, kann die Wandung 32 des Innengehäuses 34 auf der dem Körper 10 zugewandten Außenfläche und/oder die der Außenfläche zugewandte Innenfläche des Raums 30 mit einer Politur und/oder einer Beschichtung und/oder einer Bedampfung (Verspiegelung) versehen sein. Als Politur wird eine Oberflächenbehandlung zum Erreichen einer glatteren Oberfläche (z. B. Ra kleiner 0,05 µm) als die übrigen Wandflächen des Innengehäuses 34 verstanden.

Eine Verringerung der Wärmebelastung des Innengehäuses und eine weitere Reduktion des Wärmeübergangs auf den Körper 10 wird durch eine entsprechende Ausgestaltung der Oxidatormündung 16 und der Brennstoffmündung 26 in Kombination mit dem ersten konischen Abschnitt 32.1 des Brennraums 28 bzw. dessen Wandung 32 erreicht. Dabei sind die Brennstoffmündung 26 und die Oxidatormündung 16 stirnseitig an dem stromaufseitigen Ende 27 des Brennraums 28 und koaxial zu der Längsachse L symmetrisch um diese angeordnet. Die Mündungen 26, 16 sind zur axialen Zufuhr von Brennstoff und Oxidator, ohne oder mit radialer Richtungskomponente, ausgebildet. Die Brennstoffmündung 26 verläuft um die Oxidatormündung 16 ringförmig symmetrisch. Auf diese Weise positioniert sich die Verbrennungszone, in der die Spitzentemperaturen auftreten, an der Scherschicht zwischen Oxidator und Brennstoff. Durch die konische Formgebung der Wandung wird eine Strömungsablösung des Brennstoffes außen an der Brennstoffmündung 26 teilweise unterbunden. Eine teilweise Ablösung und Rückströmung findet statt, um an dem Zündmittel ein zündfähiges Gemisch zu erhalten. Ein Teil des Brennstoffstromes strömt unter Bildung eines Gasfilms entlang der Wandung 32 und bewirkt eine konvektive Kühlung, zumindest in dem axialen Bereich der Verbrennungszone.

Die Oxidatorzufuhranordnung 12 umfasst einen Zufuhrkanal 14, der stromabseitig in der Oxidatormündung 16 an dem Brennraum 28 mündet. Die Brennstoffzufuhranordnung umfasst ein Verteilerkanal 20, das abschnittsweise den Zufuhrkanal 14 des Oxidators umgebend ausgebildet ist. Der Brennstoff wird durch einen Stutzen z. B. orthogonal zu der Längsachse in den Verteilerkanal 20 zugegeben. Stromab des Verteilerkanal 20 strömt der Brennstoff in eine Hülse 22, die den Zufuhrkanal 14 des Oxidators derart beabstandet umgibt, dass ein ringspaltartiger Zufuhrkanal 24 für den Brennstoff freigegeben ist. Der ringspaltartige Zufuhrkanal 24 mündet in die Brennstoffmündung 26, die die Oxidatormündung 16 ringförmig umgibt. Die Brennstoffmündung 26 und die Oxidatormündung 16 können koplanar in einer Ebene senkrecht zu der Längsachse gelegen sein oder zueinander axial versetzt. Der Durchmesser der Oxidatormündung 16 und die radiale Höhe des Ringspaltes der Brennstoffmündung 26 sind derart gewählt, dass sich in einem gewünschten Leistungsbereich (z. B. Leistungen der Zündvorrichtung zwischen 5 kW und 500 kW, insbesondere zwischen 50 kW und 250 kW, z. B. zwischen 150 kW und 200 kW , bzgl. Umsetzung des gesamten eingebrachten Brennstoffes) hohe, je nach Brennstoff und Oxidator für den Verbrennungsbetrieb geeignete, Austrittsgeschwindigkeiten, von beispielsweise zwischen 10 m/s bis 300 m/s, z. B. 30 m/s und 200 m/s, ergeben.

Die Zündvorrichtung 1 umfasst an dem Kopfteil 52 ein (hier beispielhaft redundant ausgeführtes) Zündmittel 48 z. B. in Form einer Zündkerze. Das Zündmittel 48 ist durch eine Öffnung 49 des Innengehäuses 34, insbesondere an dessen konischem Abschnitt 32.1, mit Kontakt zu dem Brennraum 28 angeordnet. Mittels des Zündmittels 48 kann die Verbrennung in dem Brennraum 28 initiiert werden. Das Zündmittel 48 ist vorzugsweise mit Inertgas spülbar ausgebildet. Auf diese Weise kann die Zündvorrichtung 1 bzw. das Zündmittel 48 auch in dem Falle, dass in nicht betriebenem Zustand die Betriebsfähigkeit beeinträchtigende Bedingungen innerhalb der Zündvorrichtung 1 entstehen, mit Inertgas gespült und die Zündfähigkeit bzw. Betriebsfähigkeit der Zündvorrichtung 1 zügig hergestellt werden.

Neben der Öffnung 49 für das Zündmittel 48 können weitere Öffnungen 49 an dem konischen Abschnitt 32.1 vorhanden sein, beispielsweise als Zugänge für Messtechnik zur Flammendetektion. Für eine gute und geschützte Zugänglichkeit der Öffnungen 49 durch den Körper 10 sowie zur Vermeidung unerwünschter Verbrennungsbereiche ist der Raum 30 stromauf der Ringscheibe 58, ähnlich der Außenform des Innengehäuses 34, ebenfalls mit konischer Formgebung ausgestaltet. Die Formgebung ist derart, dass sich ein geringerer Abstand zu der Innenwand des Raums 30 ergibt als stromab der Ringscheibe 58. Stromab der Ringscheibe 58 ist der Raum 30 zwecks einfacher Fertigung und möglicher Längenanpassung des Innengehäuses 34 zylindrisch ausgestaltet. Eine Querschnittsreduktion des Raums 30 ist hier beispielhaft stromab des stromabseitigen Endes 29 und stromauf des am weitesten stromauf angeordneten Lagermittels 40 vorhanden.

Im Betrieb werden der Brennstoff, beispielsweise Wasserstoff, und Oxidator, insbesondere reiner Sauerstoff, über die Brennstoffzufuhranordnung 18 und die Oxidatorzufuhranordnung 12 in den Brennraum 28 eingebracht. Vorzugsweise findet der Betrieb bei einer Luftzahl bzw. einem Mischungsverhältnis statt, bei der bzw. dem die adiabate Flammentemperatur unterhalb der oberen Gebrauchstemperatur des Materials des Innengehäuses 34 liegt, zur Schonung des Innengehäuses 34. Dies kann bei Brennstoffüberschuss oder bei Oxidatorüberschuss der Fall sein.. Die Verbrennung kann auch bei einem Mischungsverhältnis resultierend in einer höheren adiabaten Flammentemperatur betrieben werden, solange die Wandtemperatur des Innengehäuses 34 auch im Dauerbetrieb unterhalb der oberen Gebrauchstemperatur des Materials des Innengehäuses liegt. Maßgeblich ist hierbei der Wärmeübergang auf das / von dem Innengehäuse. Eine hohe Leistungsdichte und Stabilität des Verbrennungsprozesses wird unter Betrieb bei erhöhtem Druck erreicht, wobei der Druck im Brennraum 28 z. B. zwischen 2 bar und 20 bar liegt. Der erhöhte Druck dient weiterhin zur Erreichung der Überschallgeschwindigkeit gegenüber Umgebungsbedingungen (auch abhängig von weiteren Stoffgrößen und Randbedingungen). Durch die koaxiale Ringanordnung der Mündungen 16, 26 ist die heiße Verbrennungszone von einem kühlenden Brenngas-Film umgeben, der die Wandung 32 konvektiv kühlt und dadurch deren Erhitzung reduziert. Stromab der Verbrennungszone strömen die bei der Verbrennung entstandenen heißen Gase durch die Düsenanordnung 36, wo sie auf Überschallgeschwindigkeit beschleunigt werden und durch den Längskanal 38 strömen. Auf diese Weise wird eine stromauf gerichtete Fortpflanzung von umgebungsseitigen Störungen in den Brennraum 28, die die Verbrennung stören könnten, verhindert bzw. erschwert. So wird im Betrieb weitestgehend eine Entkopplung des Brennraums und der Umgebung gewährleistet. Die heißen Gase verlassen das Innengehäuse 34 bzw. die Zündvorrichtung 1 durch den Austritt 44 und strömen in die zündfähige Umgebung 3 ein. Dort entzünden die heißen Gase aufgrund der hohen Temperaturen eine weitere, "äußere" Flamme, die zusätzlich zu der die heißen Gase erzeugenden Verbrennungszone innerhalb des Brennraums 28, als "innere" Flamme, entsteht. Die äußere Flamme stabilisiert an dem Austritt 44 und zündet ein zündfähiges Gemisch in der zündfähigen Umgebung 3, so dass dieses abreagieren kann. Auch ohne Vorhandensein eines zündfähigen Gemisches in der Umgebung 3 kann sich bei Betrieb mit der inneren Verbrennung mit Brennstoffüberschuss eine äußere Flamme ausbilden. Dabei entzündet sich der Restbrennstoff in dem heißen Abgas bei Kontakt mit Oxidator in der Umgebung 3.

Durch die den Wärmeübergang reduzierende Ausbildung der Zündvorrichtung 1 unter (zumindest weitgehendem) Verzicht eines Kühlsystems kann ein großer Teil des Energiegehalts des Brennstoffes in Wärme umgewandelt werden und als Zündenergie dienen. Dadurch kann ein vergleichsweise höherer Wirkungsgrad der Zündvorrichtung 1 erreicht werden, als bei Verwendung eines zusätzlichen Kühlsystems.

## Patentansprüche

1. Zündvorrichtung (1) zur Initiierung eines Verbrennungsprozesses in einer zündfähigen Umgebung (3) unter Erzeugung der Zündenergie durch Verbrennung eines Oxidator-Brennstoffgemisches, mit
- einem sich entlang einer Längsachse (L) erstreckenden Körper (10),
- einem von dem Körper (10) umschlossenen Brennraum (28),
- einer Oxidatorzufuhranordnung (12) und einer Brennstoffzufuhranordnung (18) umfassend jeweils eine Mündung (16, 26) in den Brennraum (28) und
- einem stromab des Brennraums (28) angeordneten Austritt (44) zur Anordnung an die zündfähige Umgebung (3),
wobei sich an ein stromabseitiges Ende (29) des Brennraums (28) ein Längskanal (38) anschließt und der Austritt (44) an dem stromabseitigen Ende des Längskanals angeordnet ist,**dadurch gekennzeichnet,**
**dass** der Brennraum (28) in einem separaten Innengehäuse (34) angeordnet ist, das in einem Raum (30) des Körpers (10) lösbar eingebracht ist und mit einer Wandung (32) den Brennraum (28) umgrenzt, und
**dass** ein stromabseitiges Ende (29) des Brennraums (28) in einer Düsenanordnung (36) in den Längskanal (38) übergeht, die derart ausgebildet ist, dass sich im Betrieb stromab des Brennraums (28) eine Überschallströmung einstellt.

2. Zündvorrichtung (1) nach Anspruch 1,
**dadurch gekennzeichnet,**
**dass** das Innengehäuse (34) zumindest teilweise, insbesondere großteils, von den Innenwandflächen des Raums (30) beabstandet angeordnet ist, wobei beispielsweise ein temperaturfestes Isoliermaterial, wie beispielsweise Keramik, ein hochporöser Festkörper und/oder ein Fasermaterial in dem dadurch entstehenden Zwischenraum angeordnet sein kann.

3. Zündvorrichtung (1) nach Anspruch 1 oder 2,
**dadurch gekennzeichnet,**
**dass** das Innengehäuse (34) mittels einer umlaufend an der Wandung angeordneten Ringscheibe (58) an dem Körper (10) gelagert ist.

4. Zündvorrichtung (1) nach Anspruch 3,
**dadurch gekennzeichnet,**
**dass** der Körper (10) modular aufgebaut ist, wobei er zumindest zwei voneinander lösbare Teile umfasst und wobei die Ringscheibe (58) zwischen zwei Teilen gelagert ist.

5. Zündvorrichtung (1) nach einem der vorhergehenden Ansprüche,
**dadurch gekennzeichnet,**
**dass** die Wandung (32) des Innengehäuses (34) auf der, dem Körper (10) zugewandten, Außenfläche und/oder die der Außenfläche zugewandte Innenfläche des Raums (30) zumindest bereichsweise zur Reduktion der Wärmestrahlung behandelt ist, beispielsweise mit einer Politur und/oder einer Beschichtung und/oder einer Bedampfung versehen ist.

6. Zündvorrichtung (1) nach einem der vorhergehenden Ansprüche,
**dadurch gekennzeichnet,**
**dass** der Längskanal (38) mittels zumindest zweier Lagermittel (40) derart innerhalb eines Längsabschnitts (31) des Raums (30) gegenüber diesem gelagert ist, dass der Längskanal (38) gegenüber den Innenwänden des Längsabschnitts (31) radial beabstandet angeordnet ist.

7. Zündvorrichtung (1) nach Anspruch 6,
**dadurch gekennzeichnet,**
**dass** die Lagermittel (40) jeweils mit einzelnen Streben und/oder als Ringscheiben und/oder sternförmig und/oder in Art von Vielecken, z. B. von gleichschenkligen Dreiecken, ausgebildet sind, die den Längskanal (38) jeweils symmetrisch umgeben und die z. B. einteilig mit dem Längskanal (38) verbunden sind.

8. Zündvorrichtung (1) nach einem der vorhergehenden Ansprüche,
**dadurch gekennzeichnet,**
**dass** die Brennstoffmündung (26) und die Oxidatormündung (16) stirnseitig an einem stromaufseitigen Ende (27) des Brennraums (28) zur axialen Zufuhr von Brennstoff und Oxidator in den Brennraum (28) und koaxial zu der Längsachse (L) angeordnet sind.

9. Zündvorrichtung (1) nach Anspruch 8,
**dadurch gekennzeichnet,**
**dass** die Brennstoffmündung (26) die Oxidatormündung (16) oder die Oxidatormündung (16) die Brennstoffmündung (26) ringförmig umgibt.

10. Zündvorrichtung (1) nach einem der vorhergehenden Ansprüche,
**dadurch gekennzeichnet,**
**dass** sich stromab der Brennstoffmündung (26) und/oder der Oxidatormündung (16) ein konischer Abschnitt (32.1) des Innengehäuses (34) anschließt, wobei die Wandung (32) konusartig geformt ist, sodass sich der Brennraum (28) konisch erweitert und/oder
**dass** die Zündvorrichtung (1) ein Zündmittel (48) mit Kontakt zu dem Brennraum (28) aufweist, das mittels Inertgas umspülbar ausgebildet ist.

11. Verfahren zum Betreiben einer Zündvorrichtung (10) nach einem der vorhergehenden Ansprüche zur Initiierung eines Verbrennungsprozesses in einer zündfähigen Umgebung unter Erzeugung der Zündenergie durch Verbrennung eines Oxidator-Brennstoffgemisches, bei dem Brennstoff und Oxidator in einen Brennraum (28) zugegeben und dort verbrannt werden und das entstehende heiße Gas durch einen Austritt (44) in eine zündfähige Umgebung (3) gelangt, wobei die Strömung stromauf des Austritts (44) in eine Überschallströmung übergeht, insbesondere bei Durchströmen einer Düsenanordnung (36) stromab der Verbrennungszone.

12. Verfahren nach Anspruch 11,
**dadurch gekennzeichnet,**
**dass** die Verbrennung, z. B. bei Brennstoffüberschuss, mit einem derartigen Mischungsverhältnis betrieben wird, dass die adiabate Flammentemperatur unterhalb der oberen Gebrauchstemperatur des Materials des Innengehäuses (34) liegt.

## Claims

1. Ignition device (1) for initiating a combustion process in an ignitable environment (3), thus generating the ignition energy by burning an oxidizer-fuel mixture, comprising
- a body (10) which extends along a longitudinal axis (L),
- a combustion chamber (28) which is surrounded by the body (10),
- an oxidizer supply arrangement (12) and a fuel supply arrangement (18) which each have an opening (16, 26) into the combustion chamber (28), and
- an outlet (44) which is arranged downstream of the combustion chamber (28) and intended to be arranged at the ignitable environment (3),
a longitudinal channel (38) adjoining a downstream end (29) of the combustion chamber (28) and the outlet (44) being arranged at the downstream end of the longitudinal channel, **characterized in that**
the combustion chamber (28) is arranged in a separate inner housing (34) which is removably introduced into a chamber (30) of the body (10) and delimits the combustion chamber (28) by means of a wall (32), and
a downstream end (29) of the combustion chamber (28) transitions into the longitudinal channel (38) in a nozzle arrangement (36) which is designed such that a supersonic flow occurs downstream of the combustion chamber (28) during operation.

2. Ignition device (1) according to claim 1,
**characterized in that**
the inner housing (34) is arranged at least partially, and in particular mostly, at a distance from the inner wall surfaces of the chamber (30), it being possible, for example, for a temperature-resistant insulating material, such as ceramic, a highly porous solid body, and/or a fibrous material, to be arranged in the resulting gap.

3. Ignition device (1) according to either claim 1 or claim 2,
**characterized in that**
the inner housing (34) is mounted on the body (10) by means of an annular disk (58) arranged circumferentially on the wall.

4. Ignition device (1) according to claim 3,
**characterized in that**
the body (10) is modular, said body comprising at least two parts that can be detached from one another, and the annular disk (58) being mounted between two parts.

5. Ignition device (1) according to any of the preceding claims,
**characterized in that**
the wall (32) of the inner housing (34), on the outer surface, which faces the body (10), and/or the inner surface, which faces the outer surface, of the chamber (30), is at least partly treated so as to reduce thermal radiation, for example is polished and/or coated and/or vacuum-coated.

6. Ignition device (1) according to any of the preceding claims,
**characterized in that**
the longitudinal channel (38) is mounted by means of at least two mounting means (40) within a longitudinal portion (31) of the chamber (30) relative to said chamber in such a way that the longitudinal channel (38) is arranged at a radial distance from the inner walls of the longitudinal portion (31).

7. Ignition device (1) according to claim 6,
**characterized in that**
the mounting means (40) are each designed so as to have individual struts and/or as annular disks and/or so as to be star-shaped and/or in the manner of polygons, e.g. isosceles triangles, which each symmetrically surround the longitudinal channel (38) and e.g. are each integrally connected to the longitudinal channel (38).

8. Ignition device (1) according to any of the preceding claims,
**characterized in that**
the fuel opening (26) and the oxidizer opening (16) are arranged at an upstream end (27) of the combustion chamber (28) for the axial supply of fuel and oxidizer into the combustion chamber (28) and coaxially with the longitudinal axis (L).

9. Ignition device (1) according to claim 8,
**characterized in that**
the fuel opening (26) surrounds the oxidizer opening (16) or the oxidizer opening (16) annularly surrounds the fuel opening (26).

10. Ignition device (1) according to any of the preceding claims,
**characterized in that**
there is a conical portion (32.1) of the inner housing (34) downstream of the fuel opening (26) and/or of the oxidizer opening (16), the wall (32) being cone-shaped so that the combustion chamber (28) widens conically, and/or
the ignition device (1) has an ignition means (48) which is in contact with the combustion chamber (28) and designed so that inert gas can flow around it.

11. Method for operating an ignition device (10) according to any of the preceding claims for initiating a combustion process in an ignitable environment, thus generating the ignition energy by burning an oxidizer-fuel mixture, in which method fuel and oxidizer are added to a combustion chamber (28), where they are burned, and the resulting hot gas passes through an outlet (44) into an ignitable environment (3), wherein the flow upstream of the outlet (44) transitions into a supersonic flow, in particular upon flowing through a nozzle arrangement (36) downstream of the combustion zone.

12. Method according to claim 11,
**characterized in that**
the combustion, e.g. when there is excess fuel, is operated with such a mixing ratio that the adiabatic flame temperature is below the upper operating temperature of the material of the inner housing (34).

## Revendications

1. Dispositif d'allumage (1) permettant d'initier un processus de combustion dans un environnement inflammable (3) en générant l'énergie d'allumage par combustion d'un mélange comburant-combustible, comportant
- un corps (10) s'étendant le long d'un axe longitudinal (L),
- une chambre de combustion (28) entourée par le corps (10),
- un agencement d'alimentation en comburant (12) et un agencement d'alimentation en combustible (18) comprenant respectivement un orifice (16, 26) dans la chambre de combustion (28) et
- une sortie (44) agencée en aval de la chambre de combustion (28) et permettant d'être agencée dans l'environnement inflammable (3),
un canal longitudinal (38) étant contigu à une extrémité aval (29) de la chambre de combustion (28) et la sortie (44) étant agencée à l'extrémité aval du canal longitudinal, **caractérisé en ce**
**que** la chambre de combustion (28) est agencée dans un boîtier intérieur (34) séparé, lequel est inséré de manière amovible dans une chambre (30) du corps (10) et délimite la chambre de combustion (28) par une paroi (32), et
**qu'**une extrémité aval (29) de la chambre de combustion (28) se transforme dans le canal longitudinal (38) dans un agencement de buses (36), lequel est conçu de telle sorte que pendant le fonctionnement, un écoulement supersonique se produit en aval de la chambre de combustion (28).

2. Dispositif d'allumage (1) selon la revendication 1,
**caractérisé en ce**
**que** le boîtier intérieur (34) est agencé au moins partiellement, en particulier en grande partie, à distance des surfaces de paroi intérieures de la chambre (30), un matériau isolant résistant à la température, par exemple la céramique, un corps solide hautement poreux et/ou un matériau fibreux pouvant par exemple être agencés dans la chambre intermédiaire résultante.

3. Dispositif d'allumage (1) selon la revendication 1 ou 2,
**caractérisé en ce**
**que** le boîtier intérieur (34) est monté sur le corps (10) au moyen d'un disque annulaire (58) agencé circonférentiellement sur la paroi.

4. Dispositif d'allumage (1) selon la revendication 3,
**caractérisé en ce**
**que** le corps (10) possède une structure modulaire, ledit corps comprenant au moins deux parties amovibles l'une de l'autre et le disque annulaire (58) étant monté entre deux parties.

5. Dispositif d'allumage (1) selon l'une des revendications précédentes,
**caractérisé en ce**
**que** la paroi (32) du boîtier intérieur (34) est traitée sur la surface extérieure tournée vers le corps (10) et/ou sur la surface intérieure de la chambre (30) tournée vers la surface extérieure, au moins dans certaines zones, afin de réduire le rayonnement thermique, par exemple est pourvue d'un éclat et/ou d'un revêtement et/ou d'une vaporisation.

6. Dispositif d'allumage (1) selon l'une des revendications précédentes,
**caractérisé en ce**
**que** le canal longitudinal (38) est monté, au moyen d'au moins deux moyens de montage (40), à l'intérieur d'une section longitudinale (31) de la chambre (30) par rapport à cette dernière de telle manière que le canal longitudinal (38) est agencé radialement à distance par rapport aux parois intérieures de la section longitudinale (31).

7. Dispositif d'allumage (1) selon la revendication 6,
**caractérisé en ce**
**que** les moyens de montage (40) sont conçus respectivement avec des entretoises individuelles et/ou sous forme de disques annulaires et/ou en forme d'étoile et/ou sous forme de polygones, par exemple de triangles isocèles, lesquels entourent le canal longitudinal (38) respectivement symétriquement et sont par exemple reliés au canal longitudinal (38) monobloc.

8. Dispositif d'allumage (1) selon l'une des revendications précédentes,
**caractérisé en ce**
**que** l'orifice de combustible (26) et l'orifice de comburant (16) sont agencés, côté frontal, à une extrémité amont (27) de la chambre de combustion (28) pour l'alimentation axiale de combustible et de comburant dans la chambre de combustion (28) et coaxialement à l'axe longitudinal (L).

9. Dispositif d'allumage (1) selon la revendication 8,
**caractérisé en ce**
**que** l'orifice de combustible (26) entoure annulairement l'orifice de comburant (16) ou l'orifice de comburant (16) entoure annulairement l'orifice de combustible (26).

10. Dispositif d'allumage (1) selon l'une des revendications précédentes, **caractérisé en ce**
**qu'**une section conique (32.1) du boîtier intérieur (34) est contiguë en aval de l'orifice de combustible (26) et/ou de l'orifice de comburant (16), la paroi (32) étant en forme de cône, de sorte que la chambre de combustion (28) s'élargit coniquement et/ou
**que** le dispositif d'allumage (1) présente un moyen d'allumage (48) en contact avec la chambre de combustion (28) et conçu de manière à pouvoir être balayé par un gaz inerte.

11. Procédé de fonctionnement d'un dispositif d'allumage (10) selon l'une des revendications précédentes pour initier un processus de combustion dans un environnement inflammable en générant l'énergie d'allumage par combustion d'un mélange comburant-combustible, le combustible et le comburant étant ajoutés à une chambre de combustion (28) et y étant brûlés et le gaz chaud résultant passant dans un environnement inflammable (3) par une sortie (44), l'écoulement se transformant en un écoulement supersonique en amont de la sortie (44), en particulier lorsqu'il s'écoule à travers un agencement de buses (36) en aval de la zone de combustion.

12. Procédé selon la revendication 11,
**caractérisé en ce**
**que** la combustion, par exemple lors d'un excès de combustible, fonctionne avec un rapport de mélange tel que la température de flamme adiabatique est inférieure à la température de service supérieure du matériau du boîtier intérieur (34).
